# EUROPEAN PATENT SPECIFICATION

(11) **EP 3 677 960 B1**
(45) Date of publication and mention of the grant of the patent: **15.11.2023**
(21) Application number: 18851831.0
(22) Date of filing: 28.03.2018
(51) Int. Cl.: G02F 1/1343, G02F 1/1337, G02F 1/1362, G09G 3/20, G09G 3/36

(54) **DISPLAY SUBSTRATE, DISPLAY PANEL, AND DISPLAY DEVICE**
ANZEIGESUBSTRAT, ANZEIGETAFEL UND ANZEIGEVORRICHTUNG
SUBSTRAT D'AFFICHAGE, PANNEAU D'AFFICHAGE ET DISPOSITIF D'AFFICHAGE

(30) Priority: 28.08.2017 CN 201710751655
(43) Date of publication of application: 08.07.2020
(60) Divisional application: 23191627.1
(73) Proprietor: BOE Technology Group Co., Ltd., Beijing 100015 (CN)
(72) Inventor: LONG, Chunping, Beijing 100176 (CN); XU, Jian, Beijing 100176 (CN); LI, Hui, Beijing 100176 (CN); MA, Yongda, Beijing 100176 (CN)
(74) Representative: Cohausz & Florack
(86) International application number: PCT/CN2018/080963
(87) International publication number: WO 2019/041801

(56) References cited:
- CN-A- 102 169 264
- CN-A- 104 460 159
- CN-A- 105 629 607
- CN-A- 105 629 607
- CN-A- 107 463 040
- KR-B1- 101 296 621
- US-A1- 2010 020 259
- US-A1- 2014 103 350
- US-B2- 9 723 769

## Description

This application claims the benefit of Chinese Patent Application No. 201710751655.6, filed with the Chinese Patent Office on August 28, 2017, and entitled "A display substrate, a display panel, and a display device".

### Field

This disclosure relates to the field of display technologies, and particularly to a display substrate, a display panel, and a display device.

### Background

As the sciences and technologies are advancing constantly, a Thin Film Transistor Liquid Crystal Display (TFT-LCD) is evolving gradually into a display with a high contrast, no grayscale inversion, a high brightness, a high saturation, a rapid response, a wide angle of view, etc.

For the TFT-LCD, different arrangement patterns of liquid crystal molecules correspond to different optical anisotropies, where a birefringent index is lower as an angle between incident light and the liquid crystal molecules is smaller, and higher as the angle is larger. There are different angles between light rays incident into a liquid crystal box at different angles, and the liquid crystal molecules in another direction than the normal of a display panel, so there are different valid optical path differences at different angles of view. As a valid optical path difference is varying, there is also a varying proportion of transmittances of monochromatic light in red, green, and blue, so that there may be a color cast while the liquid crystal panel is being viewed at a side angle of view, thus degrading the display effect of the liquid crystal display.

Chinese patent application CN105629607A discloses an array substrate that includes: a plurality of pixels including sub-pixels forming a matrix, each sub-pixel including a pair of sub-pixel portions; a plurality of data lines; a plurality of gate lines intersecting with the plurality of data lines; and a plurality of pairs of transistors configured to control the plurality of pairs of sub-pixel portions; wherein: each pair of transistors are disposed adjacent to an intersection between a gate line and a data line, across at least one of the gate line or the data line, and are configured to control a pair of sub-pixel portions in neighboring rows or columns of sub-pixel portions.
US patent US9723769B2 discloses an alignment film including a first pre-tilt functional group, a second pre-tilt functional group and a first vertical alignment functional group, which are linked to polysiloxane on a substrate. The first vertical alignment functional group includes a cyclic compound and is aligned substantially perpendicularly to the substrate. The first pre-tilt functional group is cross-linked to the second pre-tilt functional group and tilted with respect to the substrate.
Korean patent KR101296621B1 discloses to apply the IPS mode to the R, G, and B sub-pixels among the R, G, B, and W pixels and applies the FFS mode, which is known to have a higher aperture ratio than the IPS mode, to the W sub-pixels, so that the conventional IPS mode is achieved. It relates to a liquid crystal display device and a method for manufacturing the same, which improve transmission characteristics and lower Clc and Cst values compared to the case of designing in the conventional FFS mode, thereby making it advantageous for large panel applications. This liquid crystal display device discloses gate lines and data lines that vertically cross on the substrate to define R, G, B, W sub-pixels; a thin film transistor disposed at an intersection of the gate line and the data line; a common wiring parallel to the gate wiring; a common electrode and a first pixel electrode formed in the R, G, and B sub-pixels and parallel to each other to form a transverse electric field; a counter electrode formed in a plate shape in the W sub-pixel and a second pixel electrode insulated from the counter electrode and having a plurality of slits; and a counter substrate facing the substrate and a liquid crystal layer interposed between the substrate and the counter substrate, wherein the R, G, and B sub-pixels are transversely formed by the common electrode and the first pixel electrode formed on the same layer. It is driven by an electric field, and the W sub-pixel is driven by a fringe electric field by the counter electrode and the second pixel electrode insulated from each other.

### Summary

The claimed invention provides a display substrate for a fringe field switching (FFS) mode liquid crystal display according to claim 1.

Preferred embodiments of the invention are described by claims 2-12.

### Brief Description of the Drawings

In order to make the technical solutions according to the embodiments of the invention more apparent, the drawings to which reference is to be made in the description of the embodiments will be introduced below in brief, and apparently the drawings to be described below illustrate some embodiments of the invention.
Fig. 1 is a structural diagram of a part of a display substrate according to some embodiments of the disclosure in a top view.
Fig. 2 is a structural diagram of a part of a display substrate according to some embodiments of the disclosure in a top view.
Fig. 3 is a structural diagram of a part of a display substrate according to some embodiments of the disclosure in a top view.
Fig. 4 is a structural diagram of a part of a display substrate according to some embodiments of the disclosure in a top view.
Fig. 5 is a structural diagram of a part of a display substrate according to some embodiments of the disclosure in a top view.

### Detailed Description of the Embodiments

In order to make the objects, technical solutions, and advantages of the embodiments of the invention more apparent, the technical solutions according to the embodiments of the invention will be described below clearly and fully with reference to the drawings in the embodiments.

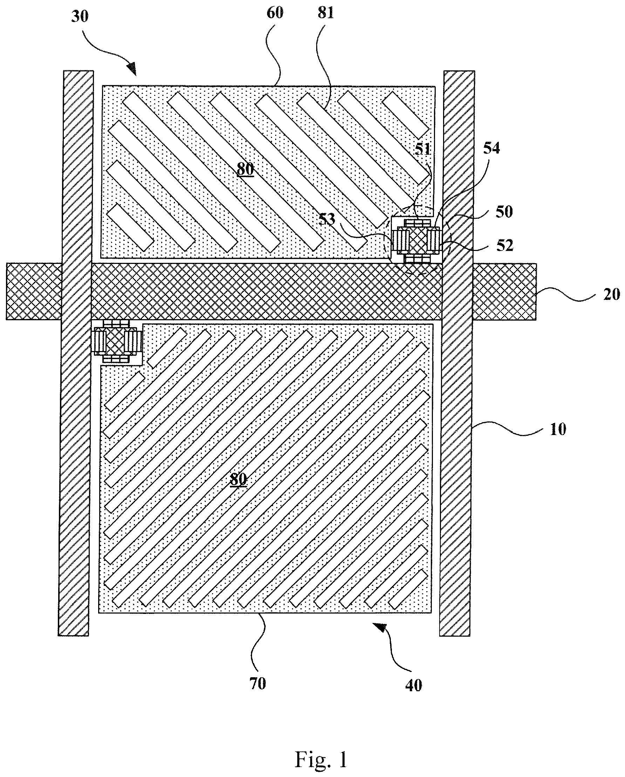

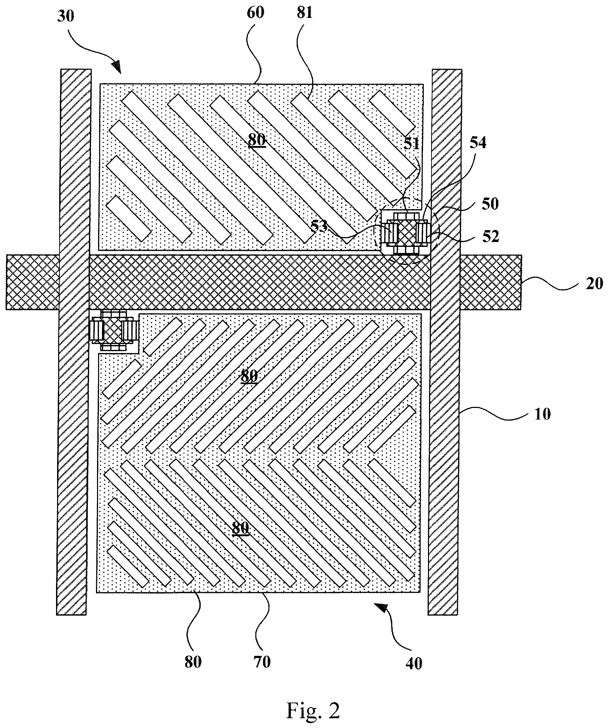

As illustrated in Fig. 1 and Fig. 2, a display substrate according to the embodiments of the invention includes: a base substrate, a plurality of pixel units arranged in an array on the base substrate, data lines 10 located between any two adjacent columns of pixel units, and a group of gate lines 20 arranged corresponding to respective rows of pixel units; where each gate line 20 segments a pixel region of each pixel unit in a corresponding row of pixel units into a first sub-pixel region 30 and a second sub-pixel region 40; each pixel unit includes slit electrodes, and two thin film transistors 50 arranged corresponding respectively to the first sub-pixel region 30 and the second sub-pixel region 40 and the slit electrodes include a first slit electrode 60 and a second slit electrode 70 corresponding respectively to the first sub-pixel region 30 and the second sub-pixel region 40.

Where each of the first slit electrode 60 and the second slit electrode 70 includes at least one slit group 80, each slit group 80 includes a plurality of slits 81 extended in a same direction, an extension direction of each slit in one of the at least one slit group 80 of the first slit electrode 60 is different from an extension direction of each slit in at least one of the at least one slit group 80 of the second slit electrode 70, and a direction of a corresponding electric field formed by the one of the at least one slit group of the first slit electrode is different from a direction of a corresponding electric field formed by the at least one of the at least one slit group of the second slit electrode.

In the embodiments of the invention, the display substrate further includes plate-shaped electrodes arranged spaced from the slit electrodes in direction of and proximate to the base substrate. As illustrated in Fig. 1 to Fig. 5, in these embodiments, the plate-shaped electrodes are particularly a common electrode (not illustrated), the slit electrodes are particularly pixel electrodes, and the first slit electrode 60 is insulated from the second slit electrode 70. In some other embodiments, the plate-shaped electrodes can be pixel electrodes, and the slit electrodes can be a common electrode. After voltage is applied to the common electrode and the pixel electrodes, an edge electric field is formed between the common electrode and the pixel electrodes so that all the liquid crystal molecules, between the comb-shaped pixel electrodes in the liquid crystal box, right above the electrodes can be deflected in a plane parallel to the base substrate, thus resulting in a higher light transmittance. Since the extension direction of each slit in the one of the at least one slit group of 80 of the first slit electrode 60 is different from the extension direction of each slit in the at least one of the at least one slit group 80 of the second slit electrode 70, directions of corresponding electric fields formed between the slit groups 80 including the slits in the different extension directions, and the plate-shaped electrodes are also different.

Here materials of the gate lines 20 and the data lines 10 will not be limited, and for example, they can include Cu, Al, Mo, Ti, Cr, W, Nd, Nb, etc.; and line widths of the gate lines 20 and the data lines 10 will not be limited, and in some embodiments of the disclosure, a line width of each gate line 20 can range from 2µm to 30µm, and a line width of each data line 10 can range from 2µm to 10µm.

In the technical solutions according to the embodiments of the invention, the two thin film transistors 50 control the first sub-pixel region 30 and the second sub-pixel region 40 respectively, where driving voltage of the first sub-pixel region 30 and the second sub-pixel region 40 can be adjusted respectively according to areas of the two sub-pixel regions, so that liquid crystal molecules corresponding to the two sub-pixel regions at a liquid crystal layer can be deflected in different directions to thereby compensate effectively for a color cast arising from only one deflection direction of the liquid crystal molecules; and the first slit electrode 60 and the second slit electrode 70 of each pixel unit include at least one slit group 80 respectively, and the extension direction of each slit in one of the at least one slit group 80 of the first slit electrode 60 is different from the extension direction of each slit in at least one of the at least one slit group 80 of the second slit electrode 70, so that each of the first sub-pixel region 30 and the second sub-pixel region 40 includes at least one domain, and deflection directions of corresponding liquid crystal molecules in respective domains are different, thus the color cast of the display device can be further alleviated, and the display device can be provided with a higher angle of view and a greatly improved display effect accordingly.

As known to those skilled in the art, each thin film transistor 50 includes a gate 51, a gate insulation layer (not illustrated) formed above the gate 51, an active layer 53 formed above the gate insulation layer, and a source 52 and a drain 53 connected respectively with the active layer 54. In the display substrate according to the embodiments of the disclosure, gates 51 of the two thin film transistors 50 of each pixel unit arranged corresponding respectively to the first sub-pixel region 30 and the second sub-pixel region 40 are connected respectively with a gate line 20 corresponding to the pixel unit, sources 52 of the two thin film transistors 50 are connected respectively with two data lines located on two sides of the pixel unit, and drains 53 of the two thin film transistors 50 are connected respectively with the first slit electrode 60 and the second slit electrode 70.

For the first slit electrode 60, slit line widths of respective slits 81 are the same, and the spacing between any two adjacent slits 81 arranged in the same direction is the same; and the same applies to the second slit electrode 70. Each slit 81 of the first slit electrode 60 has the same first slit line width, and any two adjacent slits 81 arranged in the same direction of the first slit electrode 60 have the same first slit spacing; and each slit 81 of the second slit electrode 70 has the same second slit line width, and any two adjacent slits 81 arranged in the same direction of the second slit electrode 70 has the same second slit spacing. In this way, liquid crystal molecules in the same domain have substantially the same deflection direction, and are arranged uniformly and regularly in order.

Here values of the first slit line width, the first slit spacing, the second slit line width, and the second slit spacing will not be limited, and in some embodiments, all of the first slit line width, the first slit spacing, the second slit line width, and the second slit spacing can range from 2µm to 10µm.

According to the invention, an area of the first sub-pixel region 30 is not equal to an area of the second sub-pixel region 40, so that it is convenient for the two thin film transistors 50 to provide different driving voltage according to the different areas of the first sub-pixel region 30 and the second sub-pixel region 40 respectively, therefore deflection directions of liquid crystal molecules corresponding to the two sub-pixel regions at the liquid crystal layer will be different to thereby further alleviate the color cast of the display device. In this case, design parameters of the two thin film transistors 50 can be changed to provide the two thin film transistors 50 with different channel width to length ratios so as to provide the first sub-pixel region 30 and the second sub-pixel region 40 with different voltage as needed. Moreover, the first sub-pixel region and the second sub-pixel region are provided with different driving voltage by their corresponding thin film transistors according to their different areas so that there is a better display effect of the sub-pixel region with the smaller area, at a low grayscale.

In some embodiments of the invention, the area of the first sub-pixel region is larger than the area of the second sub-pixel region, the first slit line width is less than the second slit line width, and the first slit spacing is less than the second slit spacing. In another embodiment of the invention, the area of the first sub-pixel region is smaller than the area of the second sub-pixel region, the first slit line width is greater than the second slit line width, and the first slit spacing is greater than the second slit spacing. Stated otherwise, the slit line width and the slit spacing of a slit electrode corresponding to a sub-pixel region with the smaller area are larger than the slit line width and the slit spacing of a slit electrode corresponding to a sub-pixel region with the larger area respectively, so that for the sub-pixel region with the smaller area, the larger slit line width and the larger slit spacing increase an area of the slit electrode to emit lines of electric forces, i.e., enhance a valid area of the slit electrode, so that the light transmittance of the sub-pixel region with the smaller area can be improved effectively, which will enable the two sub-pixel regions with different areas to receive approximate intensities of light to thereby further alleviate the color cast of the display device, and facilitate a uniform angle of view of the display device. Also as per the electro-optical characteristic curve, the voltage difference between adjacent grayscales in a low-grayscale area is less than the voltage difference between adjacent grayscales in a high-grayscale area, so the valid area of the slit electrode in the sub-pixel region with the smaller area can be increased to thereby improve the valid light transmittance thereof so as to improve the resolution of the display device displaying at a low grayscale.

Optionally, when the area of the first sub-pixel region is n times the area of the second sub-pixel region, the first slit line width is no less than 1/n of the second slit line width, and the first slit spacing is no less than 1/n of the second slit spacing, where n is a positive integer. With the solution according to this embodiment, the first sub-pixel region and the second sub-pixel region can receive approximate intensities of light while improving effectively the light transmittance of the sub-pixel with the smaller area, thus further improving the color cast of the display device.

As illustrated in Fig. 1, each of the first slit electrode 60 and the second slit electrode 70 includes one slit group 80, and an angle between an extension direction of each slit in the one slit group 80 of the first slit electrode 60, and an extension direction of each slit in the one slit group 80 of the second slit electrode 70 ranges from 30° to 150°. In this case, each pixel unit includes two domains. In an optional embodiment of the disclosure, the angle between the extension direction of each slit in the one slit group 80 of the first slit electrode 60, and the extension direction of each slit in the one slit group 80 of the second slit electrode 70 is 90°±1°.

As illustrated in Fig. 2, in an optional embodiment, the first slit electrode 60 includes one slit group 80, the second slit electrode 70 includes two slit groups 80 with different slit extension directions, and an angle between extension directions of slits in the two slit groups 80 of the second slit electrode 70 ranges from 10° to 170°; and in order to further alleviate the color cast of the display device, the two slit groups 80 of the second slit electrode 70 are arranged in an extension direction of the data lines 10, and an angle between an extension direction of each slit in a slit group 80, in the second slit electrode 70, arranged proximate to a corresponding gate line 20, and an extension direction of each slit in the one slit group 80 of the first slit electrode 60 ranges from 30° to 150°.

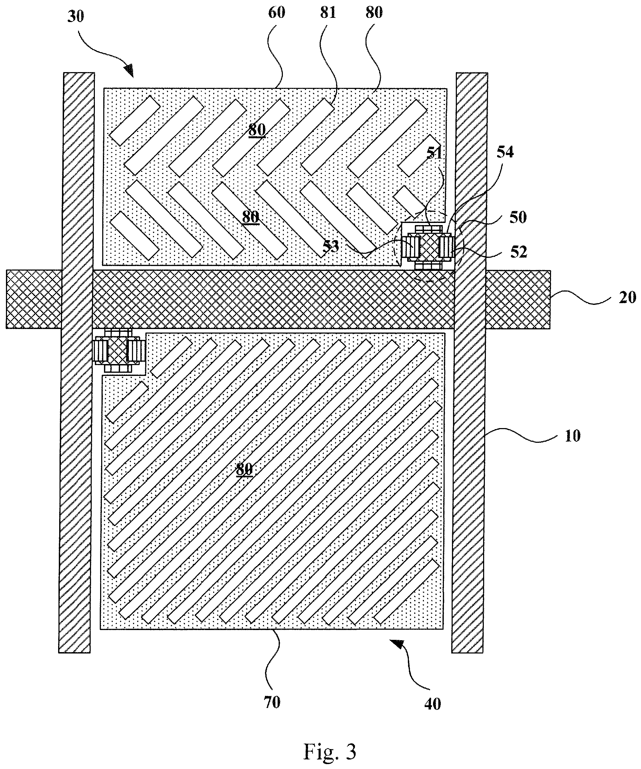

As illustrated in Fig. 3, in an optional embodiment, the second slit electrode 70 includes one slit group 80, the first slit electrode 60 includes two slit groups 80 with different extension directions of slits, and an angle between extension directions of slits in the two slit groups 80 of the first slit electrode 60 ranges from 10° to 170°; and in order to further alleviate the color cast of the display device, the two slit groups 80 of the first slit electrode 60 are arranged in an extension direction of the data lines 10, and an angle between an extension direction of each slit in a slit group 80, in the first slit electrode 60, arranged proximate to a corresponding gate line 20, and an extension direction of each slit in the one slit group 80 of the second slit electrode 70 ranges from 30° to 150°.

In the two embodiments as illustrated in Fig. 2 and Fig. 3, one sub-pixel region includes two domains, and the other sub-pixel region includes one domain, that is, each pixel unit includes three domains, thus resulting in a larger angle of view of the display device.

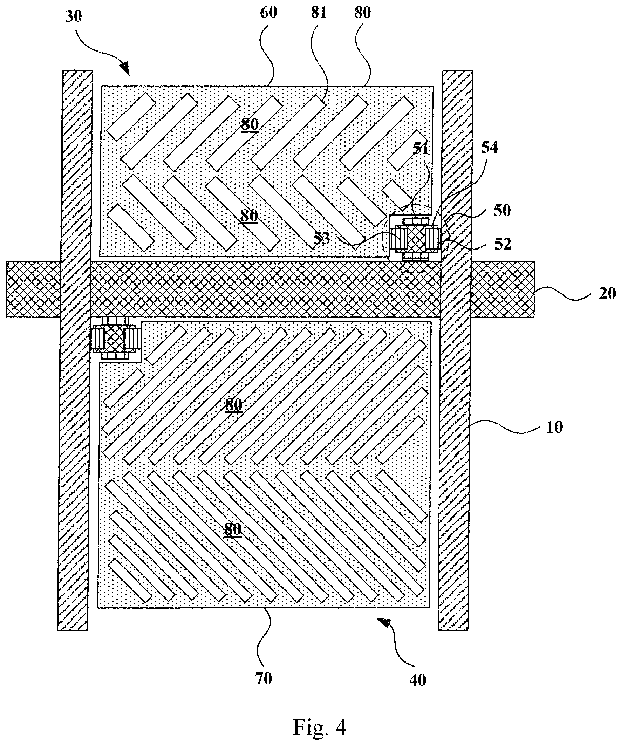

As illustrated in Fig. 4, in an optional embodiment, each of the first slit electrode 60 and the second slit electrode 70 includes two slit groups 80 with different slit extension directions, an angle between extension directions of slits in the two slit groups 80 of the first slit electrode 60 ranges from 10° to 170°, and an angle between extension directions of slits in the two slit groups 80 of the second slit electrode 70 ranges from 10° to 170°; and in order to further alleviate the color cast of the display device, the two slit groups 80 of the first slit electrode 60, and the two slit groups 80 of the second slit electrode 70 are arranged in the extension direction of the data lines 10 respectively, and an angle between an extension direction of each slit in a slit group 80, in the first slit electrode 60, arranged proximate to a corresponding gate line 20, and an extension direction of each slit in a slit group 80, in the second slit electrode 70, arranged proximate to the corresponding gate line 20 ranges from 30° to 150°, so that each pixel unit includes four domains, thus resulting in a larger angle of view of the display device.

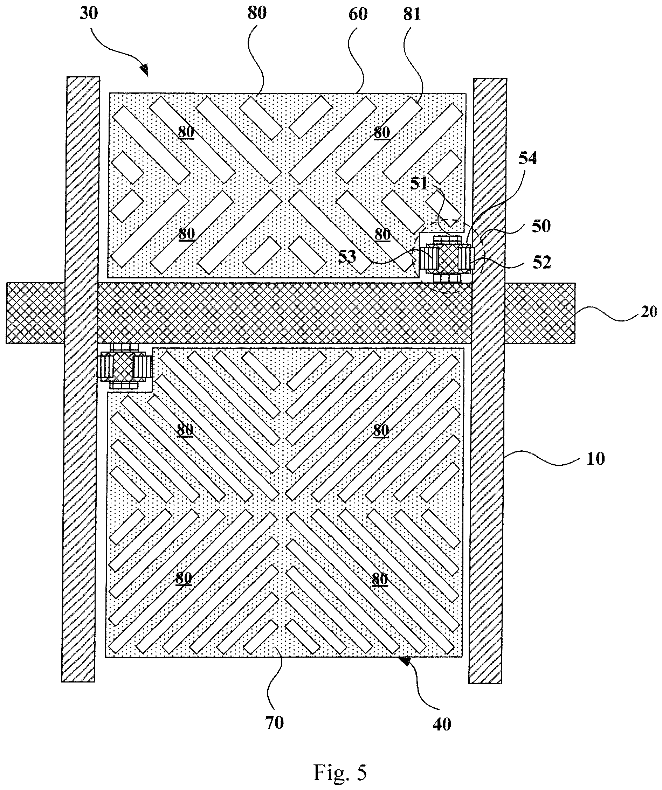

As illustrated in Fig. 5, in an optional embodiment, each of the first slit electrode 60 and the second slit electrode 70 includes four slit groups 80 arranged in two rows and two columns, a row arrangement direction of the four slit groups 80 of the first slit electrode 60 is parallel to the gate lines 20, a column arrangement direction of the four slit groups 80 of the first slit electrode 60 is parallel to the data lines 10, a row arrangement direction of the four slit groups 80 of the second slit electrode 70 is parallel to the gate lines 20, and a column arrangement direction of the four slit groups 80 of the second slit electrode 70 is parallel to the data lines 10; and furthermore, an angle between extension directions of slits in any two adjacent slit groups 80 in the first slit electrode ranges from 10° to 170°, and an angle between extension directions of slits in any two adjacent slit groups 80 in the second slit electrode ranges from 10° to 170°. In order to further alleviate the color cast of the display device, angles between extension directions of slits in two pairs of slit groups 80, in the first slit electrode 60 and the second slit electrode 70, arranged proximate to a corresponding gate line 20, and positioned opposite to each other range from 30° to 150° respectively, so that each pixel unit includes eight domains, thus resulting in a larger angle of view of the display device.

The embodiments of the invention further provide a display panel including the display substrate according to any one of the technical solutions above. A color cast of a display device to which the display panel is applied can be alleviated to thereby improve the display effect of the display device.

The embodiments of the invention further provide a display device including the display panel according to the technical solution above. A color cast of the display device can be alleviated to thereby greatly improve the display effect of the display device. Where the types of the display device are not limited, and can be a flat panel display, a tablet computer, a mobile phone, or a vehicle-mounted display, etc.

## Claims

1. A display substrate for a fringe field switching, FFS, mode liquid crystal display, comprising:
a base substrate;
a plurality of pixel units arranged in an array on the base substrate;
data lines (10) located between any two adjacent columns of pixel units; and
a group of gate lines (20) arranged corresponding to respective rows of pixel units;
wherein each gate line (20) segments a pixel region of each pixel unit in a corresponding row of pixel units into a first sub-pixel region (30) and a second sub-pixel region (40); each pixel unit comprises slit electrodes (60, 70), and two thin film transistors (50) arranged corresponding respectively to the first sub-pixel region (30) and the second sub-pixel region (40); wherein the slit electrodes (60, 70) comprise a first slit electrode (60) and a second slit electrode (70) corresponding respectively to the first sub-pixel region (30) and the second sub-pixel region (40), wherein:
each of the first slit electrode (60) and the second slit electrode (70) comprises at least one slit group (80), each slit group (80) comprises a plurality of slits (81) arranged in a same direction, an extension direction of each slit (81) in one of the at least one slit group (80) of the first slit electrode (60) is different from an extension direction of each slit (81) in at least one of the at least one slit group (80) of the second slit electrode (70);
wherein the display substrate further comprises plate-shaped electrodes arranged between a layer where the slit electrodes (60, 70) is located and the base substrate; a direction of an electric field formed between the one of the at least one slit group (80) of the first slit electrode (60) and the plate-shaped electrodes is different from a direction of an electric field formed between the at least one of the at least one slit group (80) of the second slit electrode (70) and the plate-shaped electrodes;
wherein each slit (81) of the first slit electrode (60) has a same first slit line width, and any two adjacent slits (81), arranged in the same direction, of the first slit electrode (60) have a same first slit spacing; and
each slit (81) of the second slit electrode (70) has a same second slit line width, and any two adjacent slits (81), arranged in the same direction, of the second slit electrode (70) have a same second slit spacing;
**characterized in that**,
an area of the first sub-pixel region (30) is larger than an area of the second sub-pixel region (40), the first slit line width is less than the second slit line width, and the first slit spacing is less than the second slit spacing; or an area of the first sub-pixel region (30) is smaller than an area of the second sub-pixel region (40), the first slit line width is greater than the second slit line width, and the first slit spacing is greater than the second slit spacing.

2. The display substrate according to claim 1, wherein the plate-shaped electrodes are arranged spaced from the slit electrodes (60, 70) in the direction of and proximate to the base substrate.

3. The display substrate according to claim 1, wherein when the area of the first sub-pixel region (30) is n times the area of the second sub-pixel region (40), the first slit line width is no less than 1/n of the second slit line width, and the first slit spacing is no less than 1/n of the second slit line width, wherein n is a positive number.

4. The display substrate according to claim 1, wherein each of the first slit electrode (60) and the second slit electrode (70) comprises one slit group (80), and an angle between an extension direction of each slit (81) in the one slit group (80) of the first slit electrode (60), and an extension direction of each slit (81) in the one slit group (80) of the second slit electrode (70) ranges from 30° to 150°.

5. The display substrate according to claim 1, wherein the first slit electrode (60) comprises one slit group (80), the second slit electrode (70) comprises two slit groups (80) comprising slits (81) in different extension directions, and an angle between the extension directions of the slits (81) in the two slit groups (80) of the second slit electrode (70) ranges from 10° to 170°; or
the second slit electrode (70) comprises one slit group (80), the first slit electrode (60) comprises two slit groups (80) comprising slits (81) in different extension directions, and an angle between the extension directions of the slits (81) in the two slit groups (80) of the first slit electrode (60) ranges from 10° to 170°.

6. The display substrate according to claim 5, wherein when the second slit electrode (70) comprises two slit groups (80) comprising slits (81) in different extension directions, the two slit groups (80) of the second slit electrode (70) are arranged in an extension direction of the data lines (10), and an angle between an extension direction of each slit (81) in a slit group (80), in the second slit electrode (70), arranged proximate to a corresponding gate line (20), and an extension direction of each slit (81) in the one slit group (80) of the first slit electrode (60) ranges from 30° to 150°; or
when the first slit electrode (60) comprises two slit groups (80) comprising slits (81) in different extension directions, the two slit groups (80) of the second slit electrode (70) are arranged in an extension direction of the data lines (10), and an angle between an extension direction of each slit (81) in a slit group (80), in the first slit electrode (60), arranged proximate to a corresponding gate line (20), and an extension direction of each slit (81) in the one slit group (80) of the second slit electrode (70) ranges from 30° to 150°.

7. The display substrate according to claim 1, wherein each of the first slit electrode (60) and the second slit electrode (70) comprises two slit groups (80) comprising slits (81) in different extension directions, an angle between the extension directions of the slits (81) in the two slit groups (80) of the first slit electrode (60) ranges from 10° to 170°, and an angle between the extension directions of the slits (81) in the two slit groups (80) of the second slit electrode (70) ranges from 10° to 170°.

8. The display substrate according to claim 7, wherein the two slit groups (80) of the first slit electrode (60), and the two slit groups (80) of the second slit electrode (70) are arranged in an extension direction of the data lines (10) respectively, and an angle between an extension direction of each slit (81) in a slit group (80), in the first slit electrode (60), arranged proximate to a corresponding gate line (20), and an extension direction of each slit (81) in a slit group (80), in the second slit electrode (70), arranged proximate to the corresponding gate line (20) ranges from 30° to 150°.

9. The display substrate according to claim 1, wherein each of the first slit electrode (60) and the second slit electrode (70) comprises four slit groups (80) arranged in two rows and two columns, a row arrangement direction and a column arrangement direction of the four slit groups (80) of the first slit electrode (60) are parallel to the gate lines (20) and the data lines (10) respectively, and a row arrangement direction and a column arrangement direction of the four slit groups (80) of the second slit electrode (70) are parallel to the gate lines (20) and the data lines (10) respectively; and an angle between extension directions of slits (81) in any two adjacent slit groups (80) in the first slit electrode (60) ranges from 10° to 170°, and an angle between extension directions of slits (81) in any two adjacent slit groups (80) in the second slit electrode (70) ranges from 10° to 170°.

10. The display substrate according to claim 9, wherein angles between extension directions of slits (81) in two pairs of slit groups (80), in the first slit electrode (60) and the second slit electrode (70), arranged proximate to a corresponding gate line (20), and positioned opposite to each other range from 30° to 150° respectively.

11. A display panel, comprising the display substrate according to any one of claims 1 to 10.

12. A display device, comprising the display panel according to claim 11.

## Patentansprüche

1. Anzeigesubstrat für eine Flüssigkristallanzeige im Streifenfeldschaltmodus (Fringe-Field-Switching, FFS), aufweisend:
ein Basissubstrat;
mehrere Pixeleinheiten, die in einem Array auf dem Basissubstrat angeordnet sind;
Datenleitungen (10), die sich zwischen zwei beliebigen benachbarten Spalten von Pixeleinheiten befinden; und
eine Gruppe von Gate-Leitungen (20), die entsprechend den jeweiligen Zeilen von Pixeleinheiten angeordnet sind;
wobei jede Gate-Leitung (20) eine Pixelregion jeder Pixeleinheit in einer entsprechenden Zeile von Pixeleinheiten in eine erste Subpixelregion (30) und eine zweite Subpixelregion (40) segmentiert; wobei jede Pixeleinheit Schlitzelektroden (60, 70) und zwei Dünnschichttransistoren (50) aufweist, die jeweils entsprechend der ersten Subpixelregion (30) und der zweiten Subpixelregion (40) angeordnet sind;
wobei die Schlitzelektroden (60, 70) eine erste Schlitzelektrode (60) und eine zweite Schlitzelektrode (70) umfassen, die jeweils der ersten Subpixelregion (30) und der zweiten Subpixelregion (40) entsprechen, wobei:
jede der ersten Schlitzelektrode (60) und der zweiten Schlitzelektrode (70) mindestens eine Schlitzgruppe (80) aufweist, jede Schlitzgruppe (80) mehrere Schlitze (81) aufweist, die in einer gleichen Richtung angeordnet sind, eine Erstreckungsrichtung jedes Schlitzes (81) in einer der mindestens einen Schlitzgruppe (80) der ersten Schlitzelektrode (60) sich von einer Erstreckungsrichtung jedes Schlitzes (81) in mindestens einer der mindestens einen Schlitzgruppe (80) der zweiten Schlitzelektrode (70) unterscheidet;
wobei das Anzeigesubstrat ferner plattenförmige Elektroden aufweist, die zwischen einer Schicht, in der sich die Schlitzelektroden (60, 70) befinden, und dem Basissubstrat angeordnet sind; eine Richtung eines elektrischen Feldes, das zwischen der einen der mindestens einen Schlitzgruppe (80) der ersten Schlitzelektrode (60) und den plattenförmigen Elektroden gebildet ist, sich von einer Richtung eines elektrischen Feldes unterscheidet, das zwischen der mindestens einen der mindestens einen Schlitzgruppe (80) der zweiten Schlitzelektrode (70) und den plattenförmigen Elektroden gebildet wird;
wobei jeder Schlitz (81) der ersten Schlitzelektrode (60) eine gleiche erste Schlitzlinienbreite aufweist und zwei beliebige benachbarte Schlitze (81), die in der gleichen Richtung angeordnet sind, der ersten Schlitzelektrode (60) einen gleichen ersten Schlitzabstand aufweisen; und
jeder Schlitz (81) der zweiten Schlitzelektrode (70) eine gleiche zweite Schlitzlinienbreite aufweist und zwei beliebige benachbarte Schlitze (81), die in der gleichen Richtung angeordnet sind, der zweiten Schlitzelektrode (70) einen gleichen zweiten Schlitzabstand aufweisen;
**dadurch gekennzeichnet, dass**
eine Fläche des ersten Subpixelregion (30) größer ist als eine Fläche der zweiten Subpixelregion (40), die erste Schlitzlinienbreite kleiner ist als die zweite Schlitzlinienbreite und der erste Schlitzabstand kleiner ist als der zweite Schlitzabstand; oder eine Fläche der ersten Subpixelregion (30) kleiner ist als eine Fläche der zweiten Subpixelregion (40), die erste Schlitzlinienbreite größer ist als die zweite Schlitzlinienbreite und der erste Schlitzabstand größer ist als der zweite Schlitzabstand.

2. Anzeigesubstrat nach Anspruch 1, wobei die plattenförmigen Elektroden mit einem Abstand von den Schlitzelektroden (60, 70) in Richtung des Basissubstrats und in dessen Nähe angeordnet sind.

3. Anzeigesubstrat nach Anspruch 1, wobei, wenn die Fläche der ersten Subpixelregion (30) das n-fache der Fläche der zweiten Subpixelregion (40) beträgt, die erste Schlitzlinienbreite nicht weniger als 1/n der zweiten Schlitzlinienbreite beträgt und der erste Schlitzabstand nicht weniger als 1/n der zweiten Schlitzlinienbreite beträgt, wobei n eine positive Zahl ist.

4. Anzeigesubstrat nach Anspruch 1, wobei sowohl die erste Schlitzelektrode (60) als auch die zweite Schlitzelektrode (70) eine Schlitzgruppe (80) aufweist und ein Winkel zwischen einer Erstreckungsrichtung jedes Schlitzes (81) in der einen Schlitzgruppe (80) der ersten Schlitzelektrode (60) und einer Erstreckungsrichtung jedes Schlitzes (81) in der einen Schlitzgruppe (80) der zweiten Schlitzelektrode (70) im Bereich von 30° bis 150° liegt.

5. Anzeigesubstrat nach Anspruch 1, wobei die erste Schlitzelektrode (60) eine Schlitzgruppe (80) aufweist, die zweite Schlitzelektrode (70) zwei Schlitzgruppen (80) mit Schlitzen (81) in unterschiedlichen Erstreckungsrichtungen aufweist und ein Winkel zwischen den Erstreckungsrichtungen der Schlitze (81) in den beiden Schlitzgruppen (80) der zweiten Schlitzelektrode (70) im Bereich von 10° bis 170° liegt; oder
die zweite Schlitzelektrode (70) eine Schlitzgruppe (80) aufweist, die erste Schlitzelektrode (60) zwei Schlitzgruppen (80) mit Schlitzen (81) in unterschiedlichen Erstreckungsrichtungen aufweist und ein Winkel zwischen den Erstreckungsrichtungen der Schlitze (81) in den beiden Schlitzgruppen (80) der ersten Schlitzelektrode (60) im Bereich von 10° bis 170° liegt.

6. Anzeigesubstrat nach Anspruch 5,
wobei, wenn die zweite Schlitzelektrode (70) zwei Schlitzgruppen (80) mit Schlitzen (81) in unterschiedlichen Erstreckungsrichtungen aufweist, die beiden Schlitzgruppen (80) der zweiten Schlitzelektrode (70) in einer Erstreckungsrichtung der Datenleitungen (10) angeordnet sind, und ein Winkel zwischen einer Erstreckungsrichtung jedes Schlitzes (81) in einer Schlitzgruppe (80) in der zweiten Schlitzelektrode (70), die in der Nähe einer entsprechenden Gate-Leitung (20) angeordnet ist, und einer Erstreckungsrichtung jedes Schlitzes (81) in der einen Schlitzgruppe (80) der ersten Schlitzelektrode (60) im Bereich von 30° bis 150° liegt; oder
wenn die erste Schlitzelektrode (60) zwei Schlitzgruppen (80) mit Schlitzen (81) in unterschiedlichen Erstreckungsrichtungen aufweist, die beiden Schlitzgruppen (80) der zweiten Schlitzelektrode (70) in einer Erstreckungsrichtung der Datenleitungen (10) angeordnet sind, und ein Winkel zwischen einer Erstreckungsrichtung jedes Schlitzes (81) in einer Schlitzgruppe (80) in der ersten Schlitzelektrode (60), die in der Nähe einer entsprechenden Gate-Leitung (20) angeordnet ist, und einer Erstreckungsrichtung jedes Schlitzes (81) in der einen Schlitzgruppe (80) der zweiten Schlitzelektrode (70) im Bereich von 30° bis 150° liegt.

7. Anzeigesubstrat nach Anspruch 1, wobei sowohl die erste Schlitzelektrode (60) als auch die zweite Schlitzelektrode (70) zwei Schlitzgruppen (80) mit Schlitzen (81) in unterschiedlichen Erstreckungsrichtungen aufweist, ein Winkel zwischen den Erstreckungsrichtungen der Schlitze (81) in den beiden Schlitzgruppen (80) der ersten Schlitzelektrode (60) im Bereich von 10° bis 170° liegt und ein Winkel zwischen den Erstreckungsrichtungen der Schlitze (81) in den beiden Schlitzgruppen (80) der zweiten Schlitzelektrode (70) im Bereich von 10° bis 170° liegt.

8. Anzeigesubstrat nach Anspruch 7, wobei die beiden Schlitzgruppen (80) der ersten Schlitzelektrode (60) und die beiden Schlitzgruppen (80) der zweiten Schlitzelektrode (70) jeweils in einer Erstreckungsrichtung der Datenleitungen (10) angeordnet sind, und ein Winkel zwischen einer Erstreckungsrichtung jedes Schlitzes (81) in einer Schlitzgruppe (80), in der ersten Schlitzelektrode (60), die in der Nähe einer entsprechenden Gate-Leitung (20) angeordnet ist, und einer Erstreckungsrichtung jedes Schlitzes (81) in einer Schlitzgruppe (80) in der zweiten Schlitzelektrode (70), die in der Nähe der entsprechenden Gate-Leitung (20) angeordnet ist, im Bereich von 30° bis 150° liegt.

9. Anzeigesubstrat nach Anspruch 1, wobei sowohl die erste Schlitzelektrode (60) als auch die zweite Schlitzelektrode (70) vier Schlitzgruppen (80) aufweist, die in zwei Zeilen und zwei Spalten angeordnet sind, wobei eine Zeilenanordnungsrichtung und eine Spaltenanordnungsrichtung der vier Schlitzgruppen (80) der ersten Schlitzelektrode (60) parallel zu den Gate-Leitungen (20) bzw. den Datenleitungen (10) sind und eine Zeilenanordnungsrichtung und eine Spaltenanordnungsrichtung der vier Schlitzgruppen (80) der zweiten Schlitzelektrode (70) parallel zu den Gate-Leitungen (20) bzw. den Datenleitungen (10) sind; und ein Winkel zwischen den Erstreckungsrichtungen der Schlitze (81) in zwei beliebigen benachbarten Schlitzgruppen (80) in der ersten Schlitzelektrode (60) im Bereich von 10° bis 170° liegt, und ein Winkel zwischen den Erstreckungsrichtungen der Schlitze (81) in zwei beliebigen benachbarten Schlitzgruppen (80) in der zweiten Schlitzelektrode (70) im Bereich von 10° bis 170° liegt.

10. Anzeigesubstrat nach Anspruch 9, wobei die Winkel zwischen den Erstreckungsrichtungen der Schlitze (81) in zwei Paaren von Schlitzgruppen (80) in der ersten Schlitzelektrode (60) und der zweiten Schlitzelektrode (70), die in der Nähe einer entsprechenden Gate-Leitung (20) angeordnet und einander gegenüberliegend positioniert sind, jeweils zwischen 30° und 150° liegen.

11. Anzeigetafel, die das Anzeigesubstrat nach einem der Ansprüche 1 bis 10 enthält.

12. Anzeigevorrichtung, die die Anzeigetafel nach Anspruch 11 aufweist.

## Revendications

1. Un substrat d'affichage pour un afficheur à cristaux liquides à mode de commutation de champ marginal, FFS, comprenant :
un substrat de base ;
une pluralité d'unités de pixels agencées en réseau sur le substrat de base ;
des lignes de données (10) situées entre deux colonnes adjacentes quelconques d'unités de pixels ; et
un groupe de lignes de grille (20) agencées en correspondance avec des rangées respectives d'unités de pixels ;
chaque ligne de grille (20) segmente une zone de pixels de chaque unité de pixels dans une rangée correspondante d'unités de pixels en une première zone de sous-pixels (30) et une deuxième zone de sous-pixels (40) ; chaque unité de pixel comprend des électrodes à fente (60, 70) et deux transistors à couches minces (50) agencés en correspondance respectivement avec la première zone de sous-pixel (30) et la deuxième zone de sous-pixel (40) ; les électrodes à fente (60, 70) comprennent une première électrode à fentes (60) et une deuxième électrode à fentes (70) correspondant respectivement à la première zone de sous-pixel (30) et à la deuxième zone de sous-pixel (40), avec :
chacune parmi la première électrode à fentes (60) et la deuxième électrode à fentes (70) comprend au moins un groupe de fentes (80), chaque groupe de fentes (80) comprend une pluralité de fentes (81) agencées dans une même direction, une direction d'extension de chaque fente (81) dans l'un desdits groupes de fentes (80) de la première électrode à fentes (60) est différente d'une direction d'extension de chaque fente (81) dans au moins un desdits groupes de fentes (80) de la deuxième électrode à fentes (70) ;
le substrat d'affichage comprenant en outre des électrodes en forme de plaque agencées entre une couche dans laquelle se trouvent les électrodes à fente (60, 70) et le substrat de base ; une direction d'un champ électrique formé entre ledit un groupe dudit au moins un groupe de fentes (80) de la première électrode à fentes (60) et les électrodes en forme de plaque est différente d'une direction d'un champ électrique formé entre ledit un groupe dudit au moins un groupe de fentes (80) de la deuxième électrode à fentes (70) et les électrodes en forme de plaque ;
chaque fente (81) de la première électrode à fentes (60) ayant une même première largeur de ligne de fente, et deux fentes adjacentes quelconques (81), agencées dans la même direction, de la première électrode à fentes (60) ayant un même premier espacement de fentes ; et
chaque fente (81) de la deuxième électrode à fentes (70) ayant une même deuxième largeur de ligne de fente, et deux fentes adjacentes quelconques (81), agencées dans la même direction, de la deuxième électrode à fentes (70) ayant un même deuxième espacement de fentes ;
**caractérisé en ce que**,
une superficie de la première zone de sous-pixel (30) est plus grande qu'une superficie de la deuxième zone de sous-pixel (40), la première largeur de ligne de fente est inférieure à la deuxième largeur de ligne de fente, et le premier espacement de fentes est inférieur au deuxième espacement des fentes ; ou
une zone de la première zone de sous-pixel (30) est plus petite qu'une zone de la deuxième zone de sous-pixel (40), la première largeur de ligne de fente est supérieure à la deuxième largeur de ligne de fente, et le premier espacement de fentes est supérieur au deuxième espacement de fentes.

2. Le substrat d'affichage selon la revendication 1, dans lequel les électrodes en forme de plaque sont agencées à distance des électrodes à fente (60, 70) dans la direction et à proximité du substrat de base.

3. Le substrat d'affichage selon la revendication 1, dans lequel lorsque la superficie de la première zone de sous-pixel (30) est n fois la superficie de la deuxième zone de sous-pixel (40), la première largeur de ligne de fente n'est pas inférieure à 1/n de la deuxième largeur de ligne de fente, et le premier espacement de fentes n'est pas inférieur à 1/n de la deuxième largeur de ligne de fente, n étant un nombre positif.

4. Le substrat d'affichage selon la revendication 1, dans lequel chacune parmi la première électrode à fentes (60) et la deuxième électrode à fentes (70) comprend un groupe de fentes (80), et un angle entre une direction d'extension de chaque fente (81) dans ledit un groupe de fentes (80) de la première électrode à fentes (60), et une direction d'extension de chaque fente (81) dans ledit un groupe de fentes (80) de la deuxième électrode à fentes (70) est compris entre 30° et 150°.

5. Le substrat d'affichage selon la revendication 1, dans lequel la première électrode à fentes (60) comprend un groupe de fentes (80), la deuxième électrode à fentes (70) comprend deux groupes de fentes (80) comprenant des fentes (81) dans des directions d'extension différentes, et un angle entre les directions d'extension des fentes (81) dans les deux groupes de fentes (80) de la deuxième électrode à fentes (70) est compris entre 10° et 170° ; ou
la deuxième électrode à fentes (70) comprend un groupe de fentes (80), la première électrode à fentes (60) comprend deux groupes de fentes (80) comprenant des fentes (81) dans des directions d'extension différentes, et un angle entre les directions d'extension des fentes (81) dans les deux groupes de fentes (80) de la première électrode à fentes (60) est compris entre 10° et 170°.

6. Le substrat d'affichage selon la revendication 5, dans lequel lorsque la deuxième électrode à fentes (70) comprend deux groupes de fentes (80) comprenant des fentes (81) dans des directions d'extension différentes, les deux groupes de fentes (80) de la deuxième électrode à fentes (70) sont agencés dans une direction d'extension des lignes de données (10), et un angle entre une direction d'extension de chaque fente (81) dans un groupe de fentes (80), dans la deuxième électrode à fentes (70), agencée à proximité d'une ligne de grille (20) correspondante, et une direction d'extension de chaque fente (81) dans ledit un groupe de fentes (80) de la première électrode à fentes (60) est compris entre 30° et 150° ; ou
lorsque la première électrode à fentes (60) comprend deux groupes de fentes (80) comprenant des fentes (81) dans des directions d'extension différentes, les deux groupes de fentes (80) de la deuxième électrode à fentes (70) sont agencés dans une direction d'extension des lignes de données (10), et un angle entre une direction d'extension de chaque fente (81) dans un groupe de fentes (80), dans la première électrode à fentes (60), agencée à proximité d'une ligne de grille (20) correspondante, et une direction d'extension de chaque fente (81) dans ledit un groupe de fentes (80) de la deuxième électrode à fentes (70) est compris entre 30° et 150°.

7. Le substrat d'affichage selon la revendication 1, dans lequel chacune parmi la première électrode à fentes (60) et la deuxième électrode à fentes (70) comprend deux groupes de fentes (80) comprenant des fentes (81) dans des directions d'extension différentes, un angle entre les directions d'extension des fentes (81) dans les deux groupes de fentes (80) de la première électrode à fentes (60) est compris entre 10° et 170°, et un angle entre les directions d'extension des fentes (81) dans les deux groupes de fentes (80) de la deuxième électrode à fentes (70) est compris entre 10° et 170°.

8. Le substrat d'affichage selon la revendication 7, dans lequel les deux groupes de fentes (80) de la première électrode à fentes (60) et les deux groupes de fentes (80) de la deuxième électrode à fentes (70) sont agencés dans une direction d'extension des lignes de données (10), respectivement, et un angle entre une direction d'extension de chaque fente (81) dans un groupe de fentes (80), dans la première électrode à fentes (60), agencée à proximité d'une ligne de grille (20) correspondante, et une direction d'extension de chaque fente (81) dans un groupe de fentes (80), dans la deuxième électrode à fentes (70), agencée à proximité de la ligne de grille correspondante (20), est compris entre 30° et 150°.

9. Le substrat d'affichage selon la revendication 1, dans lequel chacune parmi la première électrode à fentes (60) et la deuxième électrode à fentes (70) comprend quatre groupes de fentes (80) agencés en deux rangées et deux colonnes, une direction d'agencement de rangées et une direction d'agencement de colonnes des quatre groupes de fentes (80) de la première électrode à fentes (60) sont parallèles aux lignes de grille (20) et aux lignes de données (10) respectivement, et une direction d'agencement de rangées et une direction d'agencement de colonnes des quatre fentes des groupes (80) de la deuxième électrode à fentes (70) sont parallèles aux lignes de grille (20) et aux lignes de données (10) respectivement ; et un angle entre les directions d'extension des fentes (81) dans deux groupes de fentes adjacents quelconques (80) dans la première électrode à fentes (60) est compris entre 10° et 170°, et un angle entre les directions d'extension de fentes (81) dans deux groupes de fentes adjacents quelconques (80) dans la deuxième électrode à fentes (70) est compris entre 10° et 170°.

10. Le substrat d'affichage selon la revendication 9, dans lequel les angles entre les directions d'extension des fentes (81) dans deux paires de groupes de fentes (80), dans la première électrode à fentes (60) et la deuxième électrode à fentes (70), agencées à proximité de une ligne de grille (20) correspondante, et positionnées l'une en face de l'autre, sont compris entre 30° et 150° respectivement.

11. Un panneau d'affichage, comprenant le substrat d'affichage selon l'une quelconque des revendications 1 à 10.

12. Un dispositif d'affichage, comprenant le panneau d'affichage selon la revendication 11.
